# EUROPEAN PATENT SPECIFICATION

(11) **EP 2 135 100 B1**
(45) Date of publication and mention of the grant of the patent: **06.05.2015**
(21) Application number: 08710266.1
(22) Date of filing: 03.03.2008
(51) Int. Cl.: H04N 7/173

(54) **CONVERTING VIDEO DATA INTO VIDEO STREAMS**
UMSETZEN VON VIDEODATEN IN VIDEOSTRÖME
CONVERSION DE DONNÉES VIDÉO EN FLUX VIDÉO

(30) Priority: 15.03.2007 US 918064 P
(43) Date of publication of application: 23.12.2009
(73) Proprietor: Fabrix Tv Ltd., 43656 Raanana (IL)
(72) Inventor: DRANG, Nir, 45264 Hod-hasharon (IL); BEN-YAKIR, Ram, 46606 Herzlia (IL)
(74) Representative: Dennemeyer & Associates S.A.
(86) International application number: PCT/IL2008/000269
(87) International publication number: WO 2008/111044

(56) References cited:
- WO-A1-01/22725
- US-A- 5 941 959
- US-A1- 2002 016 961
- US-A1- 2002 026 645
- US-A1- 2006 174 032
- US-B1- 6 546 421
- US-B2- 6 556 594
- US-B2- 7 159 235
- US-B2- 7 159 235

## Description

### RELATED APPLICATION

The present application claims priority from US Provisional Application 60/918,064 of Drang et al, filed on 15 March 2007, the disclosure of which is hereby incorporated herein by reference.

### FIELD OF THE INVENTION

The present invention relates to communication apparatus, for example to video servers for video-on-demand services.

### BACKGROUND OF THE INVENTION

A video on demand (VoD) system for servicing many clients requires large amounts of processing power and therefore is generally implemented by an array of video servers, In one architecture, each VoD server has its own storage unit, referred to as a video server with interval storage or direct attached storage (DAS). This, however, requires duplicating the video files for each of the servers or directing each request for video data to a specific server that has the data required to handle the request, Therefore, in some cases, an array of VoD servers is implemented with one or more storage units connected through a network in what is referred to as network attached storage (NAS). In other cases, a storage area network, SAN, is used.

In use, in order to convert NAS stored data into a video stream, a request for video is received from a user and processed to identify where/how the content is stored. A video server associated with the identified content retrieves the video content from the storage using file storage protocols such as CIFS and NFS, extracts the video data from the video file, converts the video data to streaming video and distributes, typically using buffering, it for viewing on the clients. This conversion process requires a lot of computational resources and is expensive for large VOD deployments.

Additional background art includes:
Published US Patent Application number 2002/0026645 A1 of Son et al., which describes a method and apparatus for streaming content to an access network in an interactive information distribution system. The method encapsulates the content in accordance to an Internet Protocol (IP). The content is then transcoded into a format supported by the access network, and streamed over a distribution network to a remote server or to a subscriber terminal that is coupled to the access network. The apparatus is embodied as stream caching server for streaming the content encapsulated within the IP packet to access networks via a stream distribution network in response to a request for content. A packet processor is coupled to the stream server for processing the encapsulated content within the IP packets into a format native to the access network.

### SUMMARY OF THE INVENTION

An aspect of some embodiment of the invention relates to generating a streaming data, for example audio or video from data stored in a file system without (or with reduced) the overhead of the file system abstraction layer, for example, processing overhead. In some embodiments of the invention, streaming media data is characterized by including timing information which dedicates a desired transmission bit rate. The transmission rate is typically maintained to within an accuracy of 10%, 1% or better, with audio requirements often being greater than that of video requirements, as transient glitches may be more acceptable in video than in audio. Some of this data, and in particular data relating to the video application level are referred to herein as "metadata", and in particular file system metadata which refers to metadata describing where and how files are physically stored. Other metadata includes an identification of the video content.

In an exemplary embodiment of the invention, the overhead is reduced by (logically and/or physically) dividing up the video server into a data handling pathway and a data management pathway. Potentially, this separation allows one to use optimized architectures: data management using a complex general purpose computer and/or data handling using a dedicated architecture.

In an exemplary embodiment of the invention, data is accessed as two separate types of data: video (or other content) and metadata. The video data is processed into a video stream by converting storage packets to video packets using a lower flexibility processor (video streamer). In an exemplary embodiment of the invention, the conversion is on a "packet conversion basis" in which one or more data packets from the storage are fetched from the storage and stored in the video streamer memory; the data is read from the memory and converted to streaming packets using a "zero copy process". In an exemplary embodiment of the invention, file System metadata is processed for decision making in a different, higher flexibility, processor (controller). In an exemplary embodiment of the invention, the data is processed on a packet basis rather than on a file or block basis, however, it may be processed as groups of packets, for example, depending on internal packets sizes, compression, or other considerations. Optionally, the data is processed (and processor designed) on packets size that match what the network and/or data source support. Optionally, the lower flexibility processor is optimized for packet processing, for example including a mulitcore processor with high speed shared internal bus.

In an exemplary embodiment of the invention, the video data is transmitted directly to a video stream generator, as packets, optionally using reliable transport mechanism such as TCP and without closed-loop file management. Instead, the file system metadata is used by the controller to determine which data should be read. Upon command, this data is sent by the storage as packets to the video streamer, without the video streamer dealing with metadata, acknowledgements or handshaking at the file system level. Optionally, any handling of file system metadata, handshaking, monitoring or other high level functions are carried out by the controller, optionally using signals from the video streamer to determine arrival of data packets. Optionally, the controller controls a plurality of storage systems, to provide data from multiple storage systems in a desired order and/or synchronization.

In an exemplary embodiment of the invention, the video data from the storage is provided as IP data using a packetizer that converts raw data from storage (e.g., a disk) directly into IP packets. Optionally, the packets are switched to an appropriate video streamer by a switch, which is optionally under control of the controller.

In an exemplary embodiment of the invention, the video streamer is a packet processing hardware comprised of optimized building blocks for fast and economical processing of packets, for example, based on a network processor chip optionally comprised of multiple autonomous low cost/low power, processing cores and hardware accelerators used in router technology.

In an exemplary embodiment of the invention, a video streaming system comprises k controllers, m packet streamers and n storage devices. In an exemplary embodiment of the invention, lc<m<n. For example, for 1 controller, between 2 and 20 streamers are provided and between 1 and 100 storage devices.

In an exemplary embodiment of the invention, by separating handling of file system metadata from handling of video data, lower cost and/or complexity servers can be provided as there is no requirement for large amounts of data to be handled by a same hardware that makes decisions on the disposition of the data.

In some embodiments of the invention, storage systems and/or video streamers are integrated with an existing video server system, optionally sharing a controller.

Alternatively or additionally to using the above methodology for converting data to video streams, it may be used for converting video streams to data.

In an exemplary embodiment of the invention, video data is processed in real time or near real time using a packet processing technology, such as used for routers. Optionally, the video stream comprises a compressed video stream, for example, an MPEG-4 packet stream.

In an exemplary embodiment of the invention, the processing comprises generating video streaming packets from data packets, for example retrieving a 1,500 bytes IP data packet from the storage and converting it to 188 byte MPEG2-TS packets, then collating several MPEG2-TS packets into a single IP packet that will be transmitted isochronously (e.g., accurate timing, inter packet gap conforming to MPEG2 transport) as a video stream. Optionally, the packet generation is selected to match a particular target device, for example, a set-top box.

Optionally, the processing comprises splicing a first video stream, for example an advertisement, into a second video stream.

Optionally, the processing comprises generating a stream combined from two (or more) video streams or a stream and other data such as picture-in-picture, mosaic, or banners.

According to an aspect of some embodiments of the present invention there is provided a data streaming server, including
(a) a plurality of data storage devices,
(b) a controller,
(c) a meta data server providing physical on-disk addresses, and
(d) a packet processor,
characterized by
the controller being configured to:
receive a request for a video stream,
determine physical storage locations including physical on-disk addresses for a plurality of storage data packets using the meta data server for obtaining the physical on-disk addresses, the data packets being distributed among the plurality of data storage devices, the storage data packets each including a portion of the video stream, and
produce data retrieval instructions for controlling transmission of the plurality of storage data packets from the data storage devices to the packet processor without passing the plurality of storage data packets through the controller (106), and the packet processor (108) being configured to
receive the plurality of storage data packets, and
generate the requested video stream from the plurality of storage data packets.

According to some embodiments of the invention, the controller is adapted to send instructions to the packet processor as to how to process the data to produce the requested video stream, and the packet processor is adapted to generate the video stream according to the instructions and transmit the video stream.

According to some embodiments of the invention, the packet processor interacts with the plurality of data storage devices (102) to confirm delivery, using a TCP protocol.

According to some embodiments of the invention, the packet processor includes a packet assembler adapted to control timing of delivery of the video stream.

According to some embodiments of the invention, the packet processor includes a data processor configured to process the video stream including at least one of combining two data streams and joining two data streams.

According to some embodiments of the invention, the controller has a bandwidth to outside of the server of less than 1/4 of a bandwidth of the packet processor.

According to some embodiments of the invention, the controller is configured to receive a request for a data stream, obtain storage locations including physical on-disk addresses for data answering the request, select between a plurality of data storage devices containing data, and send data retrieval instructions for transmission of data included in the data stream to the packet processor.

According to some embodiments of the invention, the meta-data server stores storage locations including physical on-disk addresses for data stored on the plurality of data storage devices.

According to some embodiments of the invention, the controller is configured to, receive a plurality of the requests, provide instructions to a plurality of packet processors and to coordinate between the plurality of data storage devices and the plurality of packet processors.

According to some embodiments of the invention, the storage locations include physical on-disk addresses including block numbers on the plurality of data storage devices.

According to some embodiments of the invention, the controller is adapted to receive a data storage request and in response thereto control the packet processor to generate storage packets and control the plurality of data storage devices to store the storage packets at a location set by the controller.

According to some embodiments of the invention, including additional data storage associated with the controller, wherein the controller is adapted to send data from the additional storage to the packet processor, via the controller.

According to an aspect of some embodiments of the present invention there is provided a method of generating a video stream, including
(a) receiving a request for a video stream by a controller,
(b) determining, by the controller of a plurality of physical source locations including physical on-disk addresses for a plurality of data storage packets each including a portion of the video stream, the data storage packets being distributed among a plurality of data storage devices, using a meta data server, which provides physical on-disk addresses, for obtaining the source locations,
   characterized by
(c) producing data retrieval instructions by the controller for controlling transmission of the plurality of the storage packets, from the plurality of data storage devices to a packet processor for assembly of the video stream from the plurality of the data storage packets,
(d) retrieving the plurality of data storage packets including the video stream by the packet processor, from the plurality of data storage devices according to the plurality of source locations without passing the plurality of data storage packets through the controller, and
(e) generating the plurality of data storage packets into the requested video stream, by the packet processor.

According to some embodiments of the invention, the video stream is distributed among the data storage devices according to one or more considerations selected from increasing access speed, load balancing, and reliability.

According to some embodiments of the invention, further including sending instructions to the packet processor by the controller as to how to process the data storage packets to produce the video stream, and the packet processor generating the video stream according to the instructions.

In an exemplary embodiment of the invention, said controller is configured to generate a request for data from said device for processing by said packet processor. Optionally, said packet processor is a dedicated packet processor with an architecture specifically adapted for packet processing at the expense of non-packet processing.

In an exemplary embodiment of the invention, said packet processor does not interact with said storage device to confirm delivery, at a level above a transport level of a communication proposal.

In an exemplary embodiment of the invention, said packet processor is configured to receive said data from said device as packets having headers and remove said headers. Alternatively or additionally, said packet processor comprises a packet assembler adapted to control timing of delivery of streaming packets.

In an exemplary embodiment of the invention, said packet processor comprises a data processor configured to process said data including at least one of combining two data streams and joining two streams.

In an exemplary embodiment of the invention, said packet processor addresses said stream to a user.

In an exemplary embodiment of the invention, the server comprises a switch which serves to convey data from said storage device to said packet processor. Optionally, said switch serves to convey a data stream from said packet processor to a recipient.

In an exemplary embodiment of the invention, said storage device is configured to receive data requests from one physical entity and send the data to a second physical entity.

In an exemplary embodiment of the invention, said storage device is configured to send data to said packet processor as IP packets.

In an exemplary embodiment of the invention, said controller comprises a general purpose controller.

In an exemplary embodiment of the invention, said controller is has a bandwidth to outside of said device of less than 1/4 of said packet processor.

In an exemplary embodiment of the invention, said controller manages user requests.

In an exemplary embodiment of the invention, said controller is configured to receive a request for a stream and obtain physical storage locations for data answering said request.

In an exemplary embodiment of the invention, the server comprises at least one meta-data server which stores physical storage locations for data stored on said at least one storage device.

In an exemplary embodiment of the invention, said controller is configured to select between a plurality of storage devices and send data retrieval instructions thereto.

In an exemplary embodiment of the invention, said controller is configured to handle flow control between said storage device and said packet processor.

In an exemplary embodiment of the invention, said controller is configured to coordinate between a plurality of data storage devices and a plurality of packet processors.

In an exemplary embodiment of the invention, said data comprises video data. Alternatively or additionally, said data comprises audio data. Alternatively or additionally, said data comprises multiplexed audio and video data.

In an exemplary embodiment of the invention, said server comprises a plurality of data storage devices controlled by said controller.

In an exemplary embodiment of the invention, said server comprises a plurality of processors controlled by said controller.

In an exemplary embodiment of the invention, said controller is adapted to receive a data storage request and in response thereto control said packer processor to generate storage packets and control said storage device to store said packets at a location set by said controller.

In an exemplary embodiment of the invention, the server comprises additional data storage associated with said controller, wherein said controller is adapted to send data from said additional storage to said processor, via said controller.

There is also provided in accordance with an exemplary embodiment, a method of generating a data stream, comprising:
(a) receiving a request for data;
(b) determining a source location for said data by a general purpose processor;
(c) instructing said storage location to send data to a packet processor without passing through the general purpose processor; and
(d) generating a stream from said sent data, according to said request.

### BRIEF DESCRIPTION OF THE DRAWINGS

The present invention will now be described in the following detailed description of exemplary embodiments of the invention and with reference to the attached drawings, in which same or similar number designations are maintained throughout the figures for each element and in which dimensions of components and features shown in the figures are chosen for convenience and clarity of presentation and are not necessarily shown to scale. Generally, only structures, elements or parts that are germane to the discussion are shown in the figures. The figures are listed below.
Fig. 1 is a schematic block diagram of a video streaming system in accordance with an exemplary embodiment of the invention;
Fig. 2 is a flowchart of a method of data retrieval in accordance with an exemplary embodiment of the invention;
Fig. 3 is a flowchart of a method of packet processing in a dedicated packet processor in accordance with an exemplary embodiment of the invention;
Fig. 4 is a flowchart of a method of data retrieval control in accordance with an exemplary embodiment of the invention;
Fig. 5 is a flowchart of a method of data storage, in accordance with an exemplary embodiment of the invention; and
Fig. 6 is a schematic block diagram of a video streaming server integrating existing server technology and a server in accordance with an exemplary embodiment of the invention.

### DETAILED DESCRIPTION OF EXEMPLARY EMBODIMENTS

### Overview of exemplary system

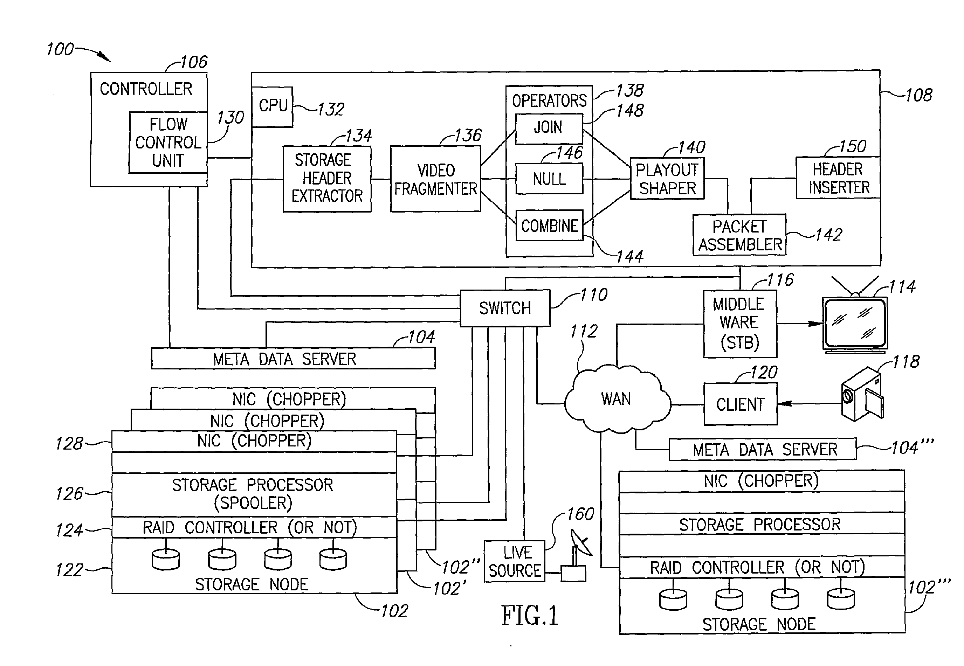

Fig. 1 is a schematic block diagram of a video streaming system 100, in which video data and file System Metadata are handled separately, in accordance with an exemplary embodiment of the invention.

Video, audio and/ or other media data (e.g., MPEG-2 transport data including both video and embedded graphics and/or applications) is stored on a storage system 102. file System metadata describing the arrangement of the data is optionally stored either on a same storage system or separately and provided by a metadata server 104. In some embodiments, the metadata is stored elsewhere and/or on controller 106 (below).

A controller 106, using file System metadata from metadata server 104 requests specific data from storage system 102. In some embodiments, metadata server 104 may convert a request for file System metadata into an actual request for data and perform that request and/or send the prepared request to controller 106.

The specific data from storage 102 is directed to a packet processor 108, optionally a modified router. In an exemplary embodiment of the invention, the data directed to a particular packet processor using a switch 110.

Processor 108 generates a stream which is conveyed (optionally via a WAN 112, such as an Internet), to a client, for example a television set 114 with a set-top box 116. In a reverse direction, streaming video may be provided by a client video source 118, using a client unit 120, back to packet processor 108 and then to storage 102.

A practical system may include more than one of each unit type. In particular, since packet processors are expected to be relatively low cost, a single controller 106 may support a plurality of packet processor 108. Similarly, a single metadata server 104 may support a plurality of storage systems 102 (e.g., 102' and 102"). Possibly, a plurality of controllers and/or metadata servers are provided.

In addition, while system 100 is described as being interconnected using a switch, other interconnection methods may be used, for example, using a router. For example, one or more data sources 102"' may be provided over WAN 112 or other non-local networking methods.

In an exemplary embodiment of the invention, system 100 is provided as a local system serving a locality, for example a branch of a cable network, for example, dedicated to serving a particular population or geographical region, optionally of a given size.

In an exemplary embodiment of the invention, a packet processor has multiple inputs, for example, 4, 8, 16 and each input has a guaranteed (non-blocking) processing pathway associated with it. In an exemplary embodiment of the invention, a packet processor includes multiple cores, for example, 16. Optionally, the distribution of load between the cores is determined using local hardware.

In an exemplary embodiment of the invention, a core is designed so that operations on a packet can be carried out within the core without accessing external memory.

In an exemplary embodiment of the invention, the packet processor has a limited instruction set (e.g., no floating point support) and/or hardware support for packet-useful instructions, for example, one or more of "memory load unaligned", bit operations such as bit replacement, byte swapping, and/or CRC and/or other checksum generation. Optionally, the instructions include memory storage instructions, for example, for indicating which part of a packet to store locally, on a core. The packet processor may be optimized to one or more packet sizes, for example, storage packet sizes, MPEG packet sizes and/or IP packet sizes.

In an exemplary embodiment of the invention, the internal bus (or busses, if several are provided) are optimized for passing packets, for example, having reduced support for interrupts or passing single words.

In an exemplary embodiment of the invention, controller 106 includes multiple types of peripheral connection means, including, for example, two or more or Ethernet, USB, SCSI, firewire and parallel links. However, in an exemplary embodiment of the invention, the bandwidth handled by the controller is less than 1/2, less than 1/10, less than 1/100 of that handled by a packet processor. Optionally, for a given stream, the ratio of data handling is even greater, for example, 1:10, 1:100, 1:1000, 1:10000 or greater or intermediate.

In an exemplary embodiment of the invention, each data storage unit 102 includes a plurality of disks, for example, four and one external IP link. Optionally, the number of links from storage is of the order of input links to the packet processors. Optionally, a single controller controls tens or hundreds of packet processors and/or storage systems.

In an exemplary embodiment of the invention, system 100 is part of a cable TV system or other media delivery system. Optionally, controller 106 provides file name translation and look up to the rest of the cable system. Optionally, controller 106 emulates a video server to a back office server component of such a system. Optionally, an encryption server is provided, for example, between switch 110 and WAN 112 to ensure the data reaching clients is encrypted. Optionally, encryption is provided by packet processor 108 or the data is stored encrypted. Optionally, an IP to RF converter is provided downstream of WAN 112 to provide data to the user in a form suitable for him. Optionally, a jitter removal element is provided downstream as well.

### Exemplary data retrieval method

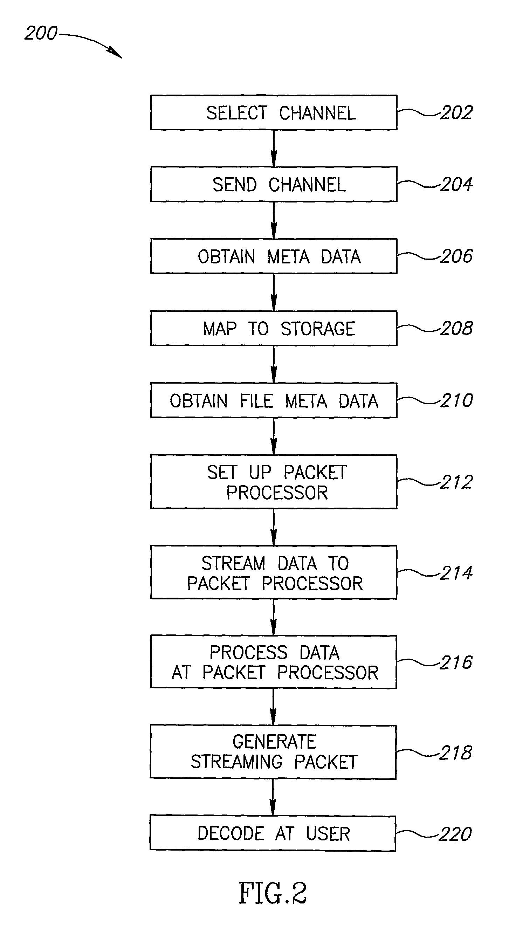

Fig. 2 is a flowchart of a method of data retrieval 200 in system 100, in accordance with an exemplary embodiment of the invention.

At 202, a user requests a particular content, for example, a video on-demand movie or a stored television channel. This request is converted (204) to a request understandable by the rest of the delivery system. Optionally, a separate server (not shown) translates the request into a command for controller 106 thus creating a communication channel between the STB 116 to the controller 106. Optionally, controller 106 also servers to handle the human interface, for example, determining which content a user is allowed to receive and/or handling billing and/or payment issues.

At 206, controller 106 requests file metadata from metadata server 104 (or from a local storage) that relates to the request. This data may include for example, the meta-data server associated with the content indicated in the request. In some cases, more than one metadata server may be needed to respond to a request.

At 208, controller 106 maps the request to a specific storage system. It is noted that the data requested may be distributed between multiple storage systems and/or physical sites.

At 210, metadata server 104 provides file system level information indicating physical storage details. For example, this data may include on-disk addresses (e.g., cylinder, block number).

At 212, packet processor 108 is optionally set up to handle the request, for example, an ID may be assigned to the request and/or a definition of processing to be carried out by packet processor 108 may be provided. Packet processor 108 optionally generates an internal flow path for the data. Optionally, the setting up is provided by controller 106 sending suitable instructions to packet processor 108.

At 214, the data is fetched from storage nodes 102, (and/or 102', 102", 102"' optionally in parallel) to packet processor 108. Optionally, the data is conveyed using switch 110, which may also interconnect additional data sources and packet processors. Optionally, switch 110 also conveys the data to the client. Optionally, switch 110 is used to pass a content stream from one packet processor to another packet processor.

In an exemplary embodiment of the invention, data streaming comprises retrieving data from one or more storage nodes 122 (optionally a RAID array having a RAID controller 124) under the supervision of a storage processor 126, which receives instructions in accordance with the metadata. This retrieved data is then optionally converted into packets, for example, by a NIC 128, which only breaks the data into packet sized elements and adds appropriate IP headers. For example, the TCP or UDP protocols may be used. Optionally, if a reliable protocol is used, packet processor 108 will respond on the protocol using acknowledge packets and the like. Alternatively, even such acknowledgement is by controller 106.

In an exemplary embodiment of the invention, storage processor 126 is simplified because it is only required to handle data forwarding and not required to manage and/or optimize a file system.

In other embodiments, a non-RAID array is used to provide a storage node 122 implemented as one or more disk sub-systems, optionally directly connected to NIC 128. Optionally, the disk sub-systems are connected directly to controller 106 and/or processor 108.

In an exemplary embodiment of the invention, when data is received by packet processor 108, the storage header information is provided to controller 106 which acknowledges receipt to storage processor 126. Optionally, controller 106 tracks missing data or out-of-band data.

In an exemplary embodiment of the invention, when data is generated by processor 126, at the end of every data train a bit is switched in a header. When this bit is detected by packet processor 108, it sends the header and/or bit and/or packet to controller 106, which interprets the bit as proof that the data request was completed. Optionally, every bit value is sent to the controller which optionally counts the bits received and/or detects the special "end of train" value itself.

At 216, the content is optionally processed by packet processor 108. Optionally, the processing includes at least removing the storage header and breaking down the received IP packet into video sized packets prior to further optional processing, such as bit rate conversion or stream annotation.

At 218, steaming packets are created and addressed, for example, standard sized IP packets which may include a plurality (e.g., 7) of MPEG2-TS packets. In an exemplary embodiment of the invention, when packets generated, controller 106 is notified, and in response may request more data from storage system 102 and/or instruct the streaming packets to be transmitted, thereby maintaining a desired packet rate and/or inter-packet delay according to the timing information available in the MPEG2 transport header. Optionally, timing is finely controlled by the packet processor with the controller providing general instructions, such as "change rate at frame X to rate Y".

At 220, the streaming packets are received by and decoded and shown by a client, to a user.

In an exemplary embodiment of the invention, the user is identified by a back-office component of the system associating an address with the user. This address is passed to controller 106 which sends it to processor 108 as part of a request set up.

In some cases, data for a single request may be stored at multiple locations 102. In an exemplary embodiment of the invention, controller 106 coordinates the collection of the data. In one example, the data is requested in parallel from the multiple sources and buffered at the packet processor, which combines the data into a single stream. Optionally, controller 106 times the data requests to each source 102, according to an estimation of when it is needed and/or based on a confirmation of receipt of data from packet processor 108, to reduce or obviate a need for buffering at packet processor 108. Optionally, a limited amount of buffering memory is available at the packet processor and is managed by controller 106.

In some cases, the same data is requested (by controller 106) in multiple copies from multiple locations, by controller 106, for example, to ensure timely delivery. Optionally, packet processor 108 selects the data to be used, for example, based on a first-come basis.

### Exemplary packet processing

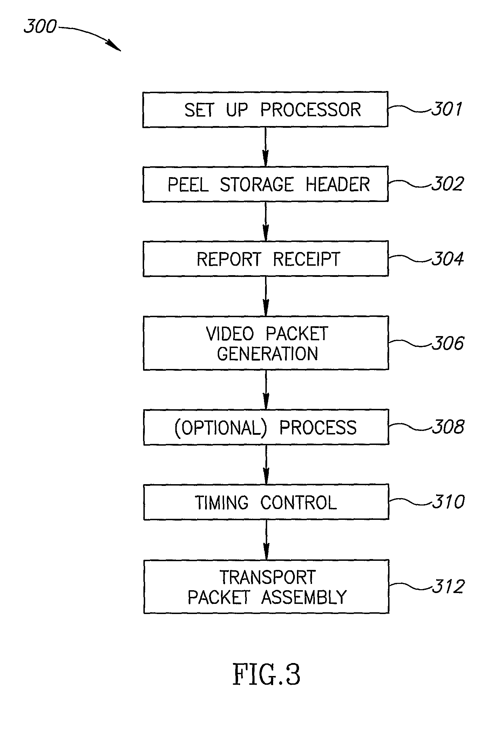

Fig. 3 is a flowchart of a method of packet processing 300 in dedicated packet processor 108 in accordance with an exemplary embodiment of the invention. It should be appreciated that while dedicated packet processor 108 is described as a series of modules, this need not be the case and other implementations are possible. In an exemplary embodiment of the invention, however, the functional elements are made to correspond to modular and/or functional units of an existing packet processor, so as to reduce costs.

At 301, and before receiving any content, packet processor 108 (optionally a CPU 132 thereof) receives advance instructions from controller 106 as to an expected stream generation. Optionally, these advance instructions include one or more of: a routing table, which matches one or more source (storage) addresses with one or more target (user) addresses, an operator to apply (optional) and parameters therefore, a size of the stream an MTU and/or other properties, such as priority or which processor component (if there are several) to use for processing the stream. In an exemplary embodiment of the invention, processor 108 is set up to include processing streams selected to match processing needs of particular requests. Optionally, controller 106 manages workload inside the packet processor if this is beyond capability of the processor hardware. Optionally, controller 106 provided microcode and/or other firmware updates to processor 108, per request and/or not synchronized to any particular request.

In an exemplary embodiment of the invention, communication between controller 106 and packet processor 108 (and/or other components of system 100) is via an IP connection, however, other connection methods may be used, for example, USB, optionally using a low-latency and reliable linking method.

At 302, received IP packets (or packets sent using another protocol), are stripped of their transport and/or storage headers, at a header extractor 134.

In an exemplary embodiment of the invention, the header extractor 134 reports to the controller 106 when the data chunk has arrived in its entirety, for flow control management. Alternatively or additionally, in an exemplary embodiment of the invention, the stripped headers are sent (304) to controller 106 or first analyzed and indications sent to controller 106, so that a determination of received content can be made.

It is noted that by controller 106 handling the receipt, control flow is simplified in packet processor 108, possibly to transport flow control only. Optionally, a routing table is used to determine which circuitry block of several of processor 108 to send the packet to.

At 306, a video fragmenter 136 splits up the received packets (if necessary) into video packets (or other content packet). Different content types may have different packet sizes, for example, MPEG2-TS is 188 bytes per packet. Different MPEG may have different headers and/or timing information. In addition, different packet types, such as data, audio and video for MPEG may be interleaved (but not processed in an interleaved manner).

At 308, the video packets are optionally processed by an operator unit 138 which may include one or more operators to be applied in series and/or in parallel, depending on the desired processing and/or available architecture.

Exemplary operators include single stream operators, such as "compress" (not shown) which compresses a stream by reducing bit rate, "null" (146) which does nothing, and "add logo" (not shown) which adds a logo to the stream and multi-stream operators, such as "splice/join" (148) which splices together two streams, such as a main stream and an advertising stream, "combine" (144) which combines two or more streams into a single stream such as picture-in-picture and/or "subtitle" (not shown) which adds voice annotation or textual subtitle annotations onto a stream, which subtitles may be provided as a separate stream. Another example of an operator is "audio swap" which replaces audio of one stream with another.

In an exemplary embodiment of the invention, a join operation is carried out as follows: the routing table includes two entries, the entries having different source addresses, but same destinations. The table may also include an indication (e.g., number of packet, frame number, byte count) when the routing comes into effect. Alternatively or additionally, controller 106 decides in real-time to enact the routing table. In the two streams, the different packet types, data, video, audio are optionally demultiplexed. When the joining is activated, the packet processor wills tart streaming the second source to the destination, while updating the headers to include a numbering matching the numbering of the first source. Controller 106 optionally updates the shaper unit (140, below) to send data at a new rate, if required. Alternatively or additionally, other activities for smoothing the transition are coordinated and/or provided by controller 106, for example, volume adjustment (e.g., controller 106 instructing processor 108 to select appropriate volume packets or process the packet to indicate a reduced volume or add header information to control playback volume). When the first stream is resumed, header count updating may continue. Optionally, the counting is reset when appropriate, by controller 106.

In a picture-in-picture application, two streams are provided by storage system 102, one includes the big picture (e.g., 3/4 of a display) and one the small picture (e.g., 1/4 of a display). The packet processor interleaves the packets to generate the combined stream including both picture portions.

At 310, the content packets are controlled with respect to timing requirements, at a shaper unit 140. For example, unit 140 can construct an inter-packet gap that is derived from the timing information contained within the MPEG2-TS header information. Optionally, shaper unit 140 notifies controller 106 of the exit of packets so that the timing of obtaining more content from storage can be determined. Alternatively or additionally, controller 106 predicts the need for new packets based on receipt of data by packet processor 108.

In an exemplary embodiment of the invention, shaper unit 140 includes a buffer to allow packet processor 108 to compensate for non-uniform arrival of data as compared to requirement for uniform transmission. Alternatively or additionally, a separate buffer is provided.

In some embodiments of the invention, system 100 is used, in addition to or instead of for synchronous media, for media in which timing can be less precise (e.g., 30%, 50% or more off), for example, HTTP and FTP QOS push.

At 312, transport packets (e.g., IP), are assembled by a packet assembler 142, for transport on a transport media (e.g., a WAN or a dedicated feed, such as for broadcasting or unicasting, for example, RF or fiber optic).

### Exemplary handshake control

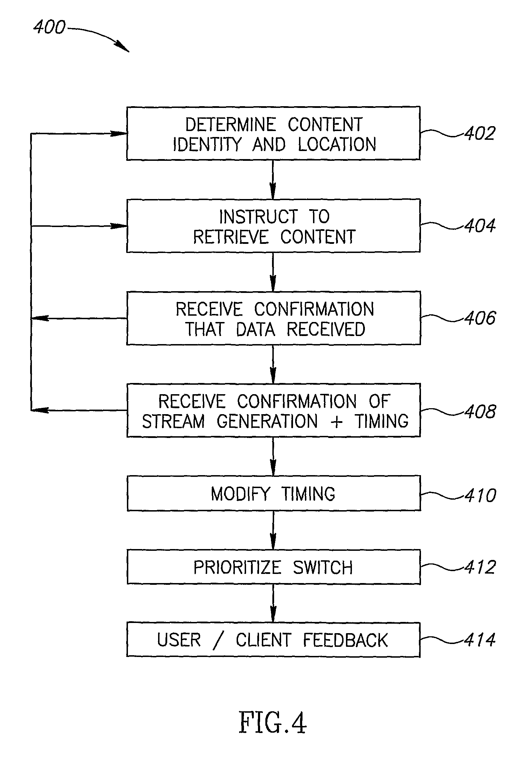

Fig. 4 is a flowchart of a method of data retrieval control 400 in accordance with an exemplary embodiment of the invention. It is a particular feature of some embodiments of the invention that control processes are handled, to the extent possible, by controller 106 so as to reduce the complexity of other system elements and enable the use of simpler and faster dedicated hardware. For example, packet processor 108 is optimized for packet processing, rather than flow control as a general purpose CPU usually is. Alternatively or additionally, switch 110 serves to switch data instead of a multi-purpose bus inside controller 106. In an exemplary embodiment of the invention, storage 102 is simplified by it not needing to manage a file system, encapsulate data in multiple headers and/or optimize disk access requests. It should be noted that processor 106 is generally involved in handling multiple (e.g., >10, >50) streams simultaneously, so the process is not necessarily applied in a strictly linear manner.

In some embodiments of the invention, some of the handshaking and/or control is performed by a separate processor or included in a system component other than the controller.

At 402, controller 106 determines the identity of requested content and location thereof on storage system 102.

At 404, controller 106 generates instructions to retrieve the content, optionally after determining which packet processor will receive and process the data. In some cases, a single stream is generated using two or more packet processors, for example, if the resulting stream is a combined stream including two separate contents, such as two TV channels or a movie and advertisements (optionally selected and/or personalized to a user using methods known in the art).

Optionally, controller 106 is in charge of load balancing between storage systems and/or packet processors and can change the source and/or processor of data based on instant or expected loads. Alternatively or additionally, controller 106 sets priorities for different streams and/or system components. Optionally, controller 106 coordinates priorities between system components, so that a stream that received a high priority at one system component is not blocked at another.

In an exemplary embodiment of the invention, load balancing is based on comparing the bit rate throughput of different processors and/or data sources. Alternatively or additionally, controller 106 optimizes disk access by re-arranging requests and/or request priorities and/or times to fulfill requests. Alternatively or additionally, controller 106 optimizes access by combining requests for those streams that multiple users request simultaneously. Optionally, sources 102 mark multi-use data in headers thereof. Alternatively or additionally, packet processor 108 multicasts or multiple-unicasts such data. Optionally, controller 106 instructs data source 102 to prefetch data and store it in a local RAM. Alternatively or additionally, controller 106 manages other caching mechanisms (e.g., a stand alone cache), if available.

At 406, controller 106 receives confirmation from packet processor 108 that it actually received the data that was supposed to be sent to it. If the data has not been received the packet processor 108 will send a fail acknowledgement to controller 106 (and/or controller 106 may wait for positive acknowledgments, optionally with a time-out). Controller 106 may request the data again (404) or may generate an alternative request (402). For example, if a disk in the storage system fails and processor 108 failed to receive the data, 106 will generate a new request to a new source. A new source may then be defined for processor 108. In another example, to prevent delays in the content stream, a lower quality data may be accessed if the higher quality data is not forthcoming (or estimated to not be available) for some reason.

At 408, controller 106 receives confirmation that the data was processed by packet processor 108. In response, controller 106 may request more data to be sent (404). Alternatively or additionally, controller 106 may predict the need for more data and request such adapt to be sent until packet processor 108 indicates it is overloaded. Some data may be rejected by the packet processor and re-retrieved under supervision of controller 106.

At 410, the timing of the outgoing packets is controlled by controller 106, for example, to ensure a desired transmission rate. One example of such control is when two streams of different bit rates are joined. Another example, is when a client, such as a set-top-box or a transmission network provide feedback that they are over-loaded or under-loaded and request a bit rate change. In an exemplary embodiment of the invention, such a request may go directly to controller 106 or indirectly via a back office server, and controller 106 controls the various components of system 100 to achieve a desired effect.

At 412, the delivery of outgoing packets is optionally determined, for example, by providing priorities to switch 110 with regard to data transport within system 100 and out of system 100 (e.g., to the end-user).

At 414, user feedback is optionally received by controller 106, for example, a request for better quality, or for skipping content. These requests optionally modify the content retrieval, processing and/or streaming. Other functions typically carried out by a back-office server may be handled by controller 106.

In other embodiments of the invention, user feedback and tracking is provided by an external component which controls system 100, such as a back-office server. Controller 106 optionally emulates a standard video server to such a back-office server.

### Exemplary data storage

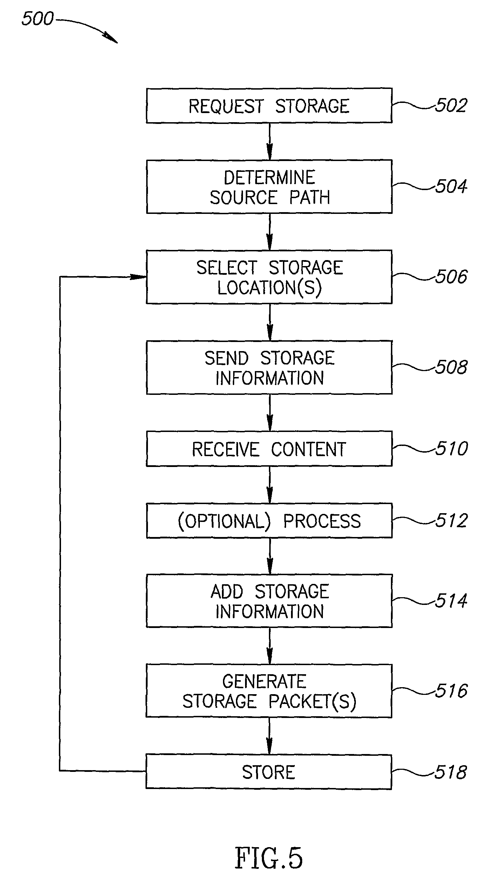

Fig. 5 is a flowchart of a method of data storage 500, in accordance with an exemplary embodiment of the invention. In general, this method may progress similar to method 200, except in a reverse direction, in that data is provided to packet processor 108 from the user and then sent for storage at storage system 102, under controller of processor 106.

At 502, a user requests to store content. This content may be provided by a local video source, for example, a user TV receiver or a user VCR or camera. Alternatively or additionally, the content is actually content provided by system 100, such as stored programs and/or content provided by a remote and/or live source, such as a satellite feed.

At 504, controller 106 determines a desired source for the data, for example, transport information or an alternative source (e.g., for locally generated or available content or using a local TV tuner or satellite feed or media stream, such as a live concert). Alternatively or additionally, controller 106 determines which packet processor is to receive the content.

At 506, controller 106 selects a storage location for the content, for example, based on availability, required bandwidth and/or volume. It is noted that during a storage process, controller 106 optionally tracks the amount of available storage and/or rate of data provision vs. storage rate and may in response assign additional and/or alternative storage location(s). The actual storage locations are optionally stored as meta-data.

At 508, an indication of the storage information is sent to packet processor 108. Optionally, this indication is provided directly by controller 106. Alternatively, the storage locations or indications thereof are provided by the user. Optionally, the user selects a storage location and then controller 106 translates this location into physical storage information.

At 510, the content is received by switch 110 and passed to packet processor 108.

At 512, the data is optionally processed, for example, transcoded to a different video format, converted to a different bit-rate, adding a watermark (or other CRM method) to prevent unauthorized duplication. Optionally, the data is first broken down into media packets by fragmenter 136, if such processing is to be carried out.

At 514, the received content is addressed, using the storage information, by an optional header insertion unit 150.

At 516, multiple packets are optionally assembled (e.g., by assembler 142) into larger storage packets, for example, multiple 1,316 Byte MTU packets may be assembled into 9KB jumbo IP frames for storage. Optionally, the storage information is added after such assembly.

At 518, the storage packets are forwarded to storage system 102 and stored. As before, controller 106 optionally manages handshakes, etc. and ensures that data sent by the user is actually received and/or stored.

In an exemplary embodiment of the invention, system 100 is used as a buffer by storing data to it and then retrieving it immediately. Optionally, this is used for pausing a TV channel, playback and/or other time manipulation features. Optionally, this function is used by components of system 100 as well, for example, if a video stream is prepared and then not immediately required.

### Distributed data storage

One drawback of some prior systems is that data which may be accessed by multiple video servers is stored in multiple copies, once for each server, due to difficulty in sharing data. In an exemplary embodiment of the invention, data storage is separated from processing, so that, theoretically, data can be stored just once and accessed multiple times. However, for various reasons multiple storage may be desirable. A first reason is increasing access speed (parallelization), which is generally practiced within a storage system. Additional reasons include, load balancing, reliability, storage virtualization, fail over, and the ability to locate and share storage islands within different parts of the network (e.g., head end, hubs) to save network bandwidth , storage and other resources such as floor space, cooling and power.

In an exemplary embodiment of the invention, data is stored in multiple locations (noted using meta-data) and controller 106 determines where to retrieve the data from, based on availability and/or network properties such as congestion and available bandwidth. Optionally, packet processors are also distributed, optionally at locations other than those of data sources and/or meta-data servers. Optionally, controller 106 (more than one may be provided) select which data sources to connect to which processors, based on network conditions and/or node availability.

In an exemplary embodiment of the invention, the data is addressed on the fly to packet processors as needed. In some cases, the same data may be retrieved twice or more, for example, to enhance on-time delivery in probabilistic systems. Optionally, the relevant packet processor is instructed by controller 106 to drop duplicate data, for example, for fail over purposes for example, for example using multicast.

### Exemplary mixed embodiment

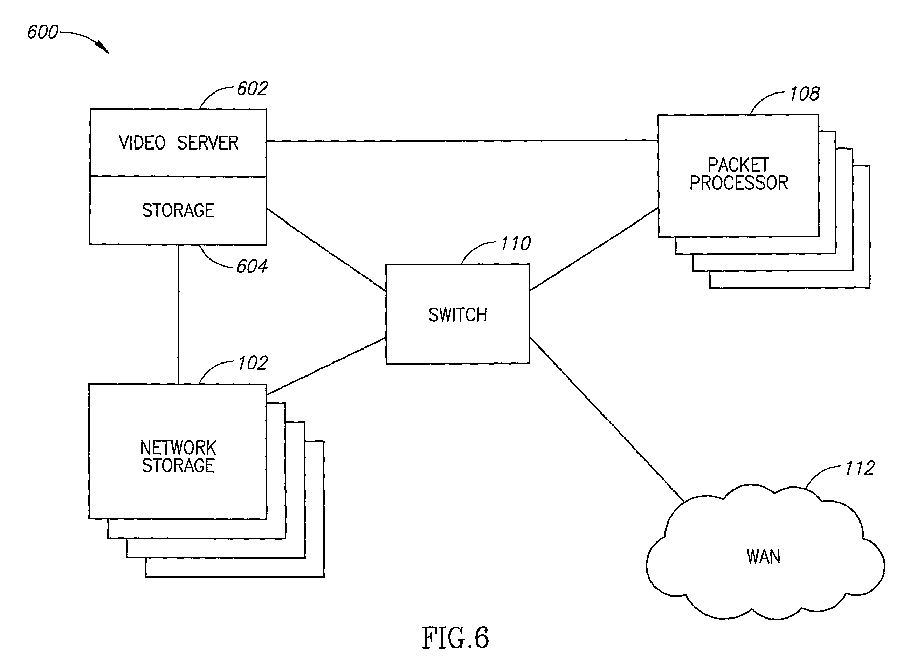

Fig. 6 is a schematic block diagram of a video streaming server system 600 integrating existing server technology and a server in accordance with an exemplary embodiment of the invention.

In an exemplary embodiment of the invention, a prior art video server 602 including content storage 604 is connected to a WAN 112 using a switch 110 (or other means). In an exemplary embodiment of the invention, video server 602 also serves to control one or more storage systems 102 and/or packet processors 108, as described above for controller 106, or a separate controller 106 may be provided. In an exemplary embodiment of the invention, metadata is stored in storage 604, or in a separate location.

As shown in the figure, data and/or control connections may be via switch 110 and/or via dedicated lines, depending on the implementation.

In an exemplary embodiment of the invention, system 100 is provided in parallel with an existing system, optionally with a gradual and user-transparent changeover.

In an exemplary embodiment of the invention, a method of updating storage 102 is provided, in which as a stream is generated by the existing server 602, the stream is sent in parallel to a user and to system 100, as a stream to be stored (e.g., Fig. 5). Optionally, system 100 emulates a set-top-box to server 602, or obtains a copy of the stream sent to the remote set-top-box using other means, for example, using a packet duplicator or by eavesdropping.

In an exemplary embodiment of the invention, system 100 is used as a cache for server 602 and is also updated at the same time. In this embodiment, a request is forwarded by the back office server to controller 106. If the data is not stored in system 100, controller 106 requests the data from video server 602, optionally by emulating a set-top-box or other client and both stores and forwards the data.

### General

While the above description has focused on video data, the systems and methods may be applied instead or in addition to other content type, for example, streaming audio. In addition, the implementation may include one or more of software, hardware, firmware and/or other types of circuitry. Computer readable media with instruction for carrying out methods as described herein, in conjunction with a programmable device, are also within the scope of the invention.

It will be appreciated that the above described apparatus may be varied in many ways, including, changing the layouts, materials, elements and structures used. It should also be appreciated that the above described description of methods and apparatus are to be interpreted as including apparatus for carrying out the methods and methods of using the apparatus.

The present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art.

It is noted that some of the above described embodiments may describe the best mode contemplated by the inventors and therefore include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims. When used in the following claims, the terms "comprise", "include", "have" and their conjugates mean "including but not limited to".

## Claims

1. A data streaming server (100), comprising:
(a) a plurality of data storage devices (102);
(b) a controller (106);
(c) a meta data server (104) providing physical on-disk addresses; and
(d) a packet processor (108),
**characterized by**:
the controller (106) being configured to:
receive a request for a video stream;
determine physical storage locations comprising physical on-disk addresses for a plurality of storage data packets using said meta data server (104) for obtaining said physical on-disk addresses, said data packets being distributed among said plurality of data storage devices (102), said storage data packets each comprising a portion of said video stream; and
produce data retrieval instructions for controlling transmission of said plurality of storage data packets from said data storage devices (102) to said packet processor (108) without passing said plurality of storage data packets through said controller (106); and
the packet processor (108) being configured to:
receive said plurality of storage data packets; and
generate said requested video stream from said plurality of storage data packets.

2. A data streaming server (100) according to claim 1 wherein:
said controller (106) is adapted to send instructions to said packet processor (108) as to how to process the data to produce said requested video stream; and
said packet processor (108) is adapted to generate said video stream according to said instructions and transmit said video stream.

3. A data streaming server (100) according to any one of the preceding claims, wherein said packet processor (108) interacts with said plurality of data storage devices (102) to confirm delivery, using a TCP protocol.

4. A data streaming server (100) according to any one of the preceding claims, wherein said packet processor (108) comprises a packet assembler adapted to control timing of delivery of said video stream.

5. A data streaming server (100) according to any one of the preceding claims, wherein said packet processor (108) comprises a data processor (126) configured to process said video stream including at least one of combining two data streams and joining two data streams.

6. A data streaming server (100) according to any one of the preceding claims, wherein said controller (106) has a bandwidth to outside of said server (100) of less than 1/4 of a bandwidth of said packet processor (108).

7. A data streaming server (100) according to any one of the preceding claims, wherein said controller (106) is configured to:
receive a request for a data stream;
obtain storage locations comprising physical on-disk addresses for data answering said request;
select between a plurality of data storage devices (102) containing data; and
send data retrieval instructions for transmission of data comprised in said data stream to the packet processor (108).

8. A data streaming server (100) according to any one of the preceding claims, wherein the meta-data server (104) stores storage locations comprising physical ondisk addresses for data stored on said plurality of data storage devices (102).

9. A data streaming server (100) according to any one of the preceding claims, wherein said controller (106) is configured to, receive a plurality of said requests, provide instructions to a plurality of packet processors (108) and to coordinate between said plurality of data storage devices (102) and said plurality of packet processors (108).

10. A data streaming server (100) according to any one of the preceding claims, wherein said storage locations comprise physical on-disk addresses comprising block numbers on said plurality of data storage devices (102).

11. A data streaming server (100) according to any one of the preceding claims, wherein said controller (106) is adapted to receive a data storage request and in response thereto control said packet processor (108) to generate storage packets and control said plurality of data storage devices (102) to store said storage packets at a location set by said controller (106).

12. A data streaming server (100, 602) according to any one of the preceding claims, comprising additional data storage (604) associated with said controller (106), wherein said controller (106) is adapted to send data from said additional storage (604) to said packet processor (108), via said controller (106).

13. A method of generating a video stream, comprising:
(a) receiving a request for a video stream by a controller (106);
(b) determining, by the controller (106) of a plurality of physical source locations comprising physical on-disk addresses for a plurality of data storage packets each comprising a portion of said video stream, the data storage packets being distributed among a plurality of data storage devices (102), using a meta data server (104), which provides physical on-disk addresses, for obtaining said source locations;
**characterized by**:
(c) producing data retrieval instructions by said controller (106) for controlling transmission of said plurality of said storage packets, from said plurality of data storage devices (102) to a packet processor (108) for assembly of said video stream from said plurality of said data storage packets,
(d) retrieving said plurality of data storage packets comprising said video stream by said packet processor (108), from said plurality of data storage devices (102) according to said plurality of source locations without passing said plurality of data storage packets through the controller (106); and
(e) generating said plurality of data storage packets into said requested video stream, by said packet processor (108).

14. A method according to claim 13 in which said video stream is distributed among said data storage devices (102) according to one or more considerations selected from:
increasing access speed;
load balancing; and
reliability.

15. A method according to any one of claims 13 and 14 and further comprising:
sending instructions to said packet processor (108) by said controller (106) as to how to process said data storage packets to produce said video stream; and
said packet processor (108) generating said video stream according to said instructions.

## Patentansprüche

1. Datenstreamingserver (100), der umfasst:
(a) eine Mehrzahl von Datenspeichereinheiten (102);
(b) eine Steuereinheit (106);
(c) einen Metadatenserver (104), der physische Adressen auf Datenträgern bereitstellt; und
(d) eine Paketverarbeitungseinheit (108),
**dadurch gekennzeichnet, dass**:
die Steuereinheit (106) konfiguriert ist zum:
Empfangen einer Anfrage für einen Videostream;
Ermitteln von physischen Speicherorten, die physische Adressen auf Datenträgern für eine Mehrzahl von Speicherdatenpaketen unter Verwendung des Metadatenservers (104) zum Erhalten der physischen Adressen auf Datenträgern umfassen, wobei die Datenpakete unter der Mehrzahl von Datenspeichereinheiten (102) verteilt sind, wobei die Speicherdatenpakete jeweils einen Teil des Videostreams umfassen; und
Erzeugen von Datenabrufanweisungen zum Steuern einer Übertragung der Mehrzahl von Speicherdatenpaketen von den Datenspeichereinheiten (102) an die Paketverarbeitungseinheit (108), ohne dass die Mehrzahl von Speicherdatenpaketen die Steuereinheit (106) passiert; und
wobei die Paketverarbeitungseinheit (108) konfiguriert ist zum:
Empfangen der Mehrzahl von Speicherdatenpaketen; und
Erzeugen des angefragten Videostreams anhand der Mehrzahl von Speicherdatenpaketen.

2. Datenstreamingserver (100) nach Anspruch 1, wobei:
die Steuereinheit (106) so ausgelegt ist, dass sie Anweisungen darüber, wie die Daten zu verarbeiten sind, um den angefragten Videostream zu erzeugen, an die Paketverarbeitungseinheit (108) sendet; und
die Paketverarbeitungseinheit (108) so ausgelegt ist, dass sie den Videostream gemäß den Anweisungen erzeugt und den Videostream überträgt.

3. Datenstreamingserver (100) nach irgendeinem der vorstehenden Ansprüche, wobei die Paketverarbeitungseinheit (108) mit der Mehrzahl von Datenspeichereinheiten (102) unter Verwendung eines TCP-Protokolls interagiert, um eine Übermittlung zu bestätigen.

4. Datenstreamingserver (100) nach irgendeinem der vorstehenden Ansprüche, wobei die Paketverarbeitungseinheit (108) einen Paketierer umfasst, der so ausgelegt ist, dass er den Zeitpunkt der Übermittlung des Videostreams steuert.

5. Datenstreamingserver (100) nach irgendeinem der vorstehenden Ansprüche, wobei die Paketverarbeitungseinheit (108) eine Datenverarbeitungseinheit (126) umfasst, die so konfiguriert ist, dass sie den Videostream verarbeitet, wobei zumindest eines von Kombinieren zweier Datenstreams und Verknüpfen zweier Datenstreams eingeschlossen ist.

6. Datenstreamingserver (100) nach irgendeinem der vorstehenden Ansprüche, wobei die Steuereinheit (106) eine Bandbreite nach außerhalb des Servers (100) von weniger als einem Viertel einer Bandbreite der Paketverarbeitungseinheit (108) aufweist.

7. Datenstreamingserver (100) nach irgendeinem der vorstehenden Ansprüche, wobei die Steuereinheit (106) konfiguriert ist zum:
Empfangen einer Anfrage für einen Datenstream;
Erhalten von Speicherorten, die physische Adressen auf Datenträgern für Daten umfassen, die die Anfrage beantworten;
Auswählen unter einer Mehrzahl von Datenspeichereinheiten (102), die Daten enthalten; und
Senden von Datenabrufanweisungen für eine Übertragung von Daten, die in dem Datenstream enthalten sind, an die Paketverarbeitungseinheit (108).

8. Datenstreamingserver (100) nach irgendeinem der vorstehenden Ansprüche, wobei der Metadatenserver (104) Speicherorte, die physische Adressen auf Datenträgern für Daten umfassen, die auf der Mehrzahl von Datenspeichereinheiten (102) gespeichert sind.

9. Datenstreamingserver (100) nach irgendeinem der vorstehenden Ansprüche, wobei die Steuereinheit (106) so konfiguriert ist, dass sie eine Mehrzahl der Anfragen empfängt, Anweisungen an eine Mehrzahl von Paketverarbeitungseinheiten (108) bereitstellt und zwischen der Mehrzahl von Datenspeichereinheiten (102) und der Mehrzahl von Paketverarbeitungseinheiten (108) koordiniert.

10. Datenstreamingserver (100) nach irgendeinem der vorstehenden Ansprüche, wobei die Speicherorte physische Adressen auf Datenträgern umfassen, die Blocknummern auf der Mehrzahl von Datenspeichereinheiten (102) umfassen.

11. Datenstreamingserver (100) nach irgendeinem der vorstehenden Ansprüche, wobei die Steuereinheit (106) so ausgelegt ist, dass sie eine Datenspeicheranfrage empfängt und in Antwort darauf die Paketverarbeitungseinheit (108) so steuert, dass diese Speicherpakete erzeugt, und die Mehrzahl von Datenspeichereinheiten (102) so steuert, dass diese die Speicherpakete an einem Ort speichern, der von der Steuereinheit (106) festgelegt wird.

12. Datenstreamingserver (100, 602) nach irgendeinem der vorstehenden Ansprüche, der einen weiteren Datenspeicher (604) umfasst, der mit der Steuereinheit (106) verbunden ist, wobei die Steuereinheit (106) so ausgelegt ist, dass sie Daten vom weiteren Speicher (604) über die Steuereinheit (106) an die Paketverarbeitungseinheit (108) sendet.

13. Verfahren zum Erzeugen eines Videostreams, das umfasst:
(a) Empfangen einer Anfrage für einen Videostream durch eine Steuereinheit (106);
(b) Ermitteln einer Mehrzahl von physischen Quellorten, die physische Adressen auf Datenträgern für eine Mehrzahl von Datenspeicherpaketen umfassen, wobei jedes davon einen Teil des Videostreams umfasst, durch die Steuereinheit (106), wobei die Datenspeicherpakete unter einer Mehrzahl von Datenspeichereinheiten (102) verteilt werden, unter Verwendung eines Metadatenservers (104), der physische Adressen auf Datenträgern bereitstellt, um die Quellorte zu erhalten;
**gekennzeichnet durch**:
(c) Erstellen von Datenabrufanweisungen **durch** die Steuereinheit (106) zum Steuern einer Übertragung der Mehrzahl der Steuerpakete von der Mehrzahl von Datenspeichereinheiten (102) an eine Paketverarbeitungseinheit (108) zum Assemblieren des Videostreams anhand der Mehrzahl der Datenspeicherpakete,
(d) Abrufen der Mehrzahl von Datenspeicherpaketen, die den Videostream umfassen, **durch** die Paketverarbeitungseinheit (108) aus der Mehrzahl von Datenspeichereinheiten (102) gemäß der Mehrzahl von Quellorten, ohne dass die Mehrzahl von Datenspeicherpaketen **durch** die Steuereinheit (106) geführt wird; und
(e) Bilden der Mehrzahl von Datenspeicherpaketen in dem angefragten Videostream **durch** die Paketverarbeitungseinheit (108).

14. Verfahren nach Anspruch 13, wobei der Videostream unter den Datenspeichereinheiten (102) verteilt wird gemäß einem oder mehreren Aspekten, die ausgewählt sind aus:
Erhöhen einer Zugriffsgeschwindigkeit;
Lastenausgleich; und
Zuverlässigkeit.

15. Verfahren nach einem der Ansprüche 13 und 14, das darüber hinaus umfasst:
Senden von Anweisungen darüber, wie die Datenspeicherpakete zu verarbeiten sind, um den Videostream zu erzeugen, an die Paketverarbeitungseinheit (108) durch die Steuereinheit (106); und
dass die Paketverarbeitungseinheit (108) den Videostream gemäß den Anweisungen erzeugt.

## Revendications

1. Serveur de diffusion en continu de données (100), comprenant :
(a) une pluralité de dispositifs de stockage de données (102) ;
(b) un contrôleur (106) ;
(c) un serveur de métadonnées (104) fournissant des adresses sur disque physiques ; et
(d) un processeur de paquets (108) ;
**caractérisé en ce que** :
le contrôleur (106) est configuré de manière à :
recevoir une demande pour un flux vidéo ;
déterminer des emplacements de stockage physique comprenant des adresses sur disque physiques pour une pluralité de paquets de données de stockage, en utilisant ledit serveur de métadonnées (104) pour obtenir lesdites adresses sur disque physiques, lesdits paquets de données étant répartis entre ladite pluralité de dispositifs de stockage de données (102), lesdits paquets de données de stockage comprenant chacun une partie dudit flux vidéo ; et
produire des instructions de récupération de données visant à commander la transmission de ladite pluralité de paquets de données de stockage desdits dispositifs de stockage de données (102) audit processeur de paquets (108), sans faire passer ladite pluralité de paquets de données de stockage à travers ledit contrôleur (106) ; et le processeur de paquets (108) est configuré de manière à :
recevoir ladite pluralité de paquets de données de stockage ; et
générer ledit flux vidéo requis à partir de ladite pluralité de paquets de données de stockage.

2. Serveur de diffusion en continu de données (100) selon la revendication 1, dans lequel :
ledit contrôleur (106) est apte à envoyer lesdites instructions audit processeur de paquets (108), lesquelles indiquent la manière de traiter les données en vue de produire ledit flux vidéo requis ; et
ledit processeur de paquets (108) est apte à générer ledit flux vidéo selon lesdites instructions et à transmettre ledit flux vidéo.

3. Serveur de diffusion en continu de données (100) selon l'une quelconque des revendications précédentes, dans lequel ledit processeur de paquets (108) interagit avec ladite pluralité de dispositifs de stockage de données (102) en vue de confirmer la livraison, en utilisant un protocole TCP.

4. Serveur de diffusion en continu de données (100) selon l'une quelconque des revendications précédentes, dans lequel ledit processeur de paquets (108) comporte un assembleur de paquets apte à commander la temporisation de livraison dudit flux vidéo.

5. Serveur de diffusion en continu de données (100) selon l'une quelconque des revendications précédentes, dans lequel ledit processeur de paquets (108) comporte un processeur de données (126) configuré de manière à traiter ledit flux vidéo, incluant au moins un traitement parmi une combinaison de deux flux de données et une jonction de deux flux de données.

6. Serveur de diffusion en continu de données (100) selon l'une quelconque des revendications précédentes, dans lequel ledit contrôleur (106) présente une largeur de bande vers l'extérieur dudit serveur (100) égale à moins de 1/4 d'une largeur de bande dudit processeur de paquets (108).

7. Serveur de diffusion en continu de données (100) selon l'une quelconque des revendications précédentes, dans lequel ledit contrôleur (106) est configuré de manière à :
recevoir une demande pour un flux de données ;
obtenir des emplacements de stockage comprenant des adresses sur disque physiques pour les données répondant à ladite demande ;
opérer une sélection entre une pluralité de dispositifs de stockage de données (102) contenant des données ; et
envoyer des instructions de récupération de données, pour une transmission de données incluses dans ledit flux de données, au processeur de paquets (108).

8. Serveur de diffusion en continu de données (100) selon l'une quelconque des revendications précédentes, dans lequel le serveur de métadonnées (104) stocke des emplacements de stockage comprenant des adresses sur disque physiques pour des données stockées sur ladite pluralité de dispositifs de stockage de données (102).

9. Serveur de diffusion en continu de données (100) selon l'une quelconque des revendications précédentes, dans lequel ledit contrôleur (106) est configuré de manière à recevoir une pluralité desdites demandes, fournir des instructions à une pluralité de processeurs de paquets (108) et coordonner entre ladite pluralité de dispositifs de stockage de données (102) et ladite pluralité de processeurs de paquets (108).

10. Serveur de diffusion en continu de données (100) selon l'une quelconque des revendications précédentes, dans lequel lesdits emplacements de stockage comprennent des adresses sur disque physiques comprenant des numéros de blocs sur ladite pluralité de dispositifs de stockage de données (102).

11. Serveur de diffusion en continu de données (100) selon l'une quelconque des revendications précédentes, dans lequel ledit contrôleur (106) est apte à recevoir une demande de stockage de données et, en réponse à celle-ci, à commander audit processeur de paquets (108) de générer des paquets de stockage, et à commander à ladite pluralité de dispositifs de stockage de données (102) de stocker lesdits paquets de stockage au niveau d'un emplacement défini par ledit contrôleur (106).

12. Serveur de diffusion en continu de données (100, 602) selon l'une quelconque des revendications précédentes, comprenant un stockage de données supplémentaire (604) associé audit contrôleur (106), dans lequel ledit contrôleur (106) est apte à envoyer des données, dudit stockage supplémentaire (604) audit processeur de paquets (108), par l'intermédiaire dudit contrôleur (106).

13. Procédé de génération d'un flux vidéo, comprenant:
(a) de recevoir une demande pour un flux vidéo par le biais d'un contrôleur (106) ;
(b) de déterminer, par le biais du contrôleur (106), une pluralité d'emplacements source physiques comprenant des adresses sur disque physiques pour une pluralité de paquets de stockage de données comprenant chacun une partie dudit flux vidéo, les paquets de stockage de données étant répartis entre une pluralité de dispositifs de stockage de données (102), en utilisant un serveur de métadonnées (104), lequel fournit des adresses sur disque physiques, en vue d'obtenir lesdits emplacements source ;
**caractérisé par**:
(c) produire des instructions de récupération de données, par le biais dudit contrôleur (106), visant à commander la transmission de ladite pluralité desdits paquets de stockage, de ladite pluralité de dispositifs de stockage de données (102) à un processeur de paquets (108), en vue de l'assemblage dudit flux vidéo à partir de ladite pluralité desdits paquets de stockage de données ;
(d) extraire ladite pluralité de paquets de stockage de données comprenant ledit flux vidéo, par le biais dudit processeur de paquets (108), de ladite pluralité de dispositifs de stockage de données (102), selon ladite pluralité d'emplacements source, sans faire passer ladite pluralité de paquets de stockage de données à travers le contrôleur (106) ; et
(e) générer ladite pluralité de paquets de stockage de données dans ledit flux vidéo requis, par le biais dudit processeur de paquets (108).

14. Procédé selon la revendication 13, dans lequel ledit flux vidéo est réparti entre lesdits dispositifs de stockage de données (102) selon une ou plusieurs des considérations sélectionnées parmi :
l'augmentation de la vitesse d'accès ;
l'équilibrage de charge ; et
la fiabilité.

15. Procédé selon l'une quelconque des revendications 13 et 14, et comprenant en outre:
d'envoyer des instructions audit processeur de paquets (108), par le biais dudit contrôleur (106), concernant la manière de traiter lesdits paquets de stockage de données en vue de produire ledit flux vidéo ; et
de générer, par le biais dudit processeur de paquets (108), ledit flux vidéo, selon lesdites instructions.
